# EUROPEAN PATENT SPECIFICATION

(11) **EP 2 109 200 B1**
(45) Date of publication and mention of the grant of the patent: **27.04.2016**
(21) Application number: 09156917.8
(22) Date of filing: 31.03.2009
(51) Int. Cl.: H02G 3/14

(54) **Power point with proximity sensor**
Leistungspunkt mit Näherungssensor
Point alimentation avec capteur de proximité

(30) Priority: 11.04.2008 IT VE20080031
(43) Date of publication of application: 14.10.2009
(73) Proprietor: Elardo, Fabio, 35100 Padova (IT); Romano, Michele, 31020 San Pietro di Feletto (IT); Tubiana, Oreste, 310300 Breda di Piave (IT)
(72) Inventor: Elardo, Fabio, 35100 Padova (IT); Romano, Michele, 31020 San Pietro di Feletto (IT); Tubiana, Oreste, 310300 Breda di Piave (IT)
(74) Representative: Piovesana, Paolo

(56) References cited:
- WO-A-2004/023034
- DE-A1- 10 307 473
- DE-A1- 10 329 358
- DE-C1- 19 541 665

## Description

The present invention relates to a power point with proximity sensor.

Electrical wiring system components intended for civil, industrial, naval and other uses are known, defined generally as "power points" or "lighting points" in the sense that they can relate to any point at which the wiring, which is normally embedded, emerges to the outside and can be associated with a single or multiple switch, or a socket, etc.

Generally a power point is housed in a box fixed to a supporting structure and comprises a support fixed to said box to support the individual modules or inserts (switches, sockets, thermostats, etc.), and a cover which covers the support with the exception of that part which has to remain exposed and which, for example in the case of a switch, is the operating lever or pushbutton, while in the case of a socket it is that portion into which a pin connector is to be inserted.

Power points are also known comprising a proximity sensor; the purpose of these is to sense the presence of a person in the vicinity of the power point and to process the signal obtained from the sensor to control an electronic switch. In practice, the approach of a person to the power point results in the same operation as that manually carried out in traditional power points by that same person to directly operate an electromechanical switch.

Power points are also known comprising a light source able to indicate the position of the power point, to enable a user to locate it even in poor or zero visibility. This light source can be mounted on a suitable insert or on the operating lever of a switch or on the power point closure cover.

These solutions have proved satisfactory but require the light source to be constantly active, which under certain situations can be annoying, particularly at night, and moreover result in a useless energy wastage.

DE 10307473 discloses an input switching unit for an electrical installation, e.g. a lighting circuit, with a display that can be activated by a user. The display has a switching field that is activated by a user. The display has a partially transparent covering layer so that the display can only be seen when it is activated, i.e. illuminated. The display is activated by the presence of a person or a transponder, which is detected by a sensor.

WO2004023034 discloses a light source, a light shade, and a control sensor. The light source includes a plug-in type fluorescent lamp element mounted on a lamp seat. The control sensor might be a visible light detecting photocell or a motion sensor. Control means turn the light source on or off in response to the condition detected by the control sensor. This document is the closest prior art.

The object of the present invention is to provide a power point locatable by the user in poor or zero visibility conditions, while at the same time eliminating the aforesaid drawback of known power points with a constantly active light source.

This and other objects which will be apparent from the ensuing description are attained according to the invention by a power point as claimed in claim 1.

The present invention is further clarified hereinafter with reference to the accompanying drawings, in which:
Figure 1 is an exploded perspective view of a power point according to the invention;
Figure 2 is an assembled perspective view thereof;
Figure 3 is a plan view of the support to be applied to the break-out box;
Figure 4 is a cross-section therethrough on the line IV-IV of Figure 3;
Figure 5 is a cross-section therethrough on the line V-V of Figure 3; and
Figure 6 shows a simplified electrical scheme thereof.

As can be seen from the figures, the power point of the invention can consist of a multiple switch to be applied to a traditional flush-mounted box 2 fixed to the wall.

It comprises a support 4, to be fixed to the box 2 and preferably provided with a perimetral groove 6 for housing a seal gasket 8, a printed circuit card 10 applied to the support 4, a transparent cover plate 12 for said card, also applied to the support 4 and adhering to the gasket 8, and a closure cover 14 to be snap-fitted to said support 4.

The support 4 is preferably made of semitransparent plastic material and has a perimetral surface for securing to the box 2, a depressed central portion 18 for housing the components mounted on the printed circuit card 10, a perimetral step 20 bounding the seat into which the card 10 is inserted and, external to the perimetral groove 6, an outer band in which members 22 are provided for the snap-engagement of the cover 14.

The printed circuit card 10 is of rectangular shape, exactly housable in the seat defined by the perimetral step 20 and having its components mounted on its inner surface, and hence housable in the depressed portion 18.

To allow a certain adjustment of the position of the support 4 relative to the box 2, both said support 4 and said printed circuit card 10 present slotted holes 16, 24 for the passage of screws for fixing the support to the box 2.

The various components of the card 10 comprise in particular a microprocessor processing unit, three side-by-side capacitive control switches, three LEDs 26 mounted at those points on the plate 12 on which the operator has to position the finger to individually and selectively operate the capacitive switches, and a plurality of further perimetral LEDs 28.

As in the case of the other components, both the LEDs 26 and the LEDs 28 are applied to the surface of the card 10, which presents at each of these LEDs a hole through which the respective LED is visible from the outside.

The transparent plate 12 has greater dimensions than the card 10, such as to rest on the seal gasket 8. Its stability in the tangential direction is ensured by the fact that its edge rests against the members 22 for snap-fitting the closure cover 14.

A proximity sensor 30, which can be of electric field type (e.g. capacitive), of magnetic type (e.g. inductive), or of electromagnetic type (e.g. microwave, infrared) is also applied to the card 10.

The plate 12 can be made of dark coloured glass, such as not to allow the underlying card 10 to be seen, but to make the LEDs 26 visible when lit. It can also be made of different material, including opaque, in which case holes must be provided at the LEDs 26 to enable them to be seen from the outside.

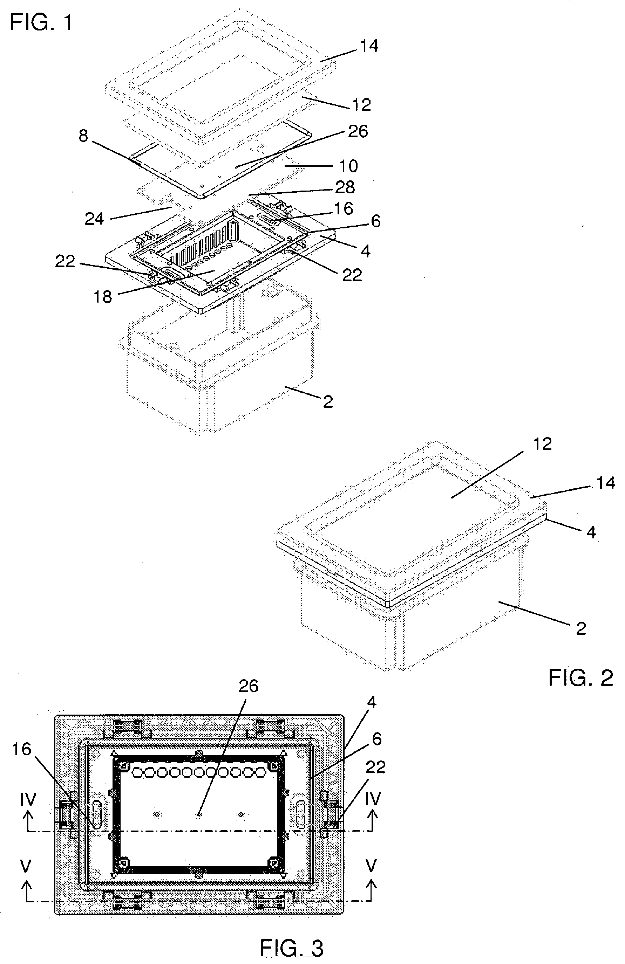

The closure cover 14 has an external shape identical to that of the support 4, in order to exactly overlie with its edge the edge of the outer band of the support 4 and to leave this visible from the outside (see Figure 1). This cover also comprises on its inner surface, i.e. on that surface facing the support 4, a plurality of appendices 32 snap-engaging in the members 22 provided in the outer band of the support.

The power point of the invention, consisting for example of a multiple switch (comprising three modules or three inserts) applied to a wall, operates in the following manner:
when at rest, in which all three switches are deactivated, all the LEDs are unlit but the proximity sensor 30 is powered.

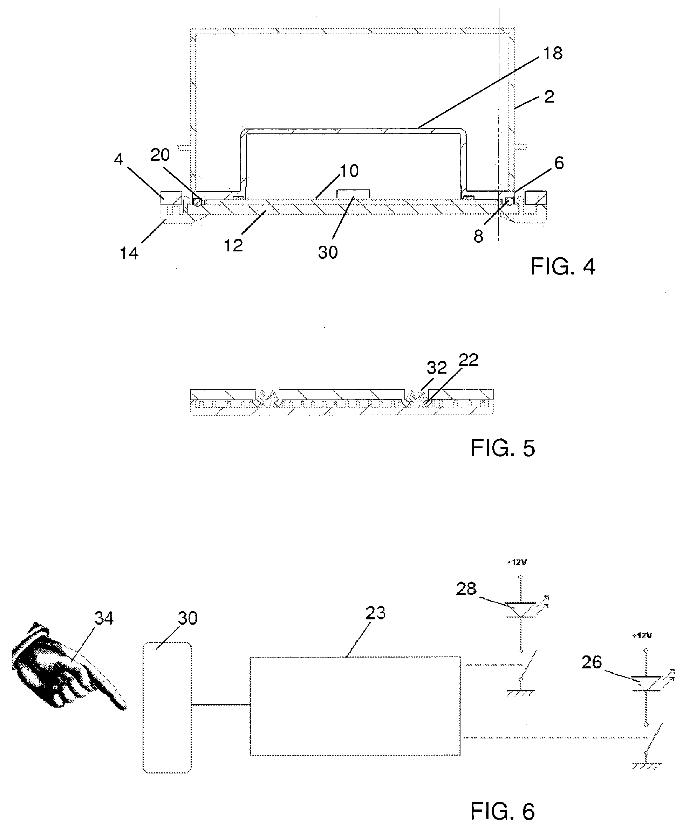

As a person, indicated in Figure 6 by a hand 34, approaches the proximity sensor 30, the presence is sensed and a signal is fed to the processor unit 23. This causes the perimetral LEDs 28 to light continuously and the three LEDs 26 applied to the three switches to light intermittently.

The perimetral LEDs 28 illuminate the perimetral band of the support 4 which, being made of transparent material, is visible from the outside, even in zero visibility conditions, under the cover 14. At the same time the LEDs 26 display by pulsed light those points of the plate 12 on which the user has to rest a finger to operate the chosen switch.

If within a time Tₐ, established at the programming stage, no activation command is fed, the processor unit 23 extinguishes the LEDs 26, 28 and the device returns to the rest state.

If instead the user wishes to operate one of the three switches, the user rests a finger within a time Tₐ on the flashing LED 26 relative to that switch, to activate it in order for example to light a traditional lamp located in the room.

This activation causes that LED 26 relative to the operated switch to change from intermittent lighting to continuous lighting, but this has no effect on the other LEDs in the sense that the LEDs 28 continue to remain lit while the two remaining LEDs 26 continue to flash to indicate to the user the positions for operating the corresponding switches.

After the time Tₐ, the perimetral LEDs 28 and the two pulsating LEDs 26 are extinguished, while only that LED 26 relative to the operated switch remains lit with continuous light.

If, after this extinguishing, the user again approaches the power point, the proximity sensor 30 senses the presence and relights the perimetral LEDs 28 with continuous light and relights with pulsed light the two LEDs 26 which have been extinguished.

If the user touches one of these pulsating LEDs 26 with a finger, the relative lamp lights and changes the intermittent light of that LED into continuous light, whereas if the LED already lit with continuous light is touched with the finger, this extinguishes the previously lit lamp and changes that LED from the continuously lit condition to the pulsed light condition.

The advantages of the power point of the invention are evident, in that it remains always extinguished when it is not to be activated, and in addition to avoiding useless energy wastage it dispenses with position lighting in those situations in which it is not required.

Moreover the power point of the invention enables the location of the different switches positioned in the same support to be indicated even in the dark, to hence prevent the operator from operating the wrong switch because of insufficient vision.

The gasket 8 interposed between the plate and the support provides a seal which ensures correct and regular operation of the unit in moist environments, making the power point particularly suitable for use in the nautical sector.

By suitably programming its processor unit 23, the power point of the invention can be programmed or reconfigured to perform different functions such as switch, change-over switch, etc. One of the most important is for this processor unit to also, or alternatively to cause the LEDs 26,28 to light in the same power point on which it is mounted, be able to cause the LEDs in a different power point to light, for example a socket in a different position from the switches, and hence locatable under poor or zero visibility conditions.

In another application of the power point of the invention, the LED or LEDs 28 are mounted in proximity to the keyhole of a lock, hence enabling the user, on approach, to illuminate the hole into which the key is to be inserted for operating the lock.

Finally, the power point of the invention can be adapted for pre-existing electric wiring systems. In this case the traditional insert-carrying support can be replaced with a new support 4 of similar characteristics to that replaced, but with an incorporated or applied electronic card carrying the proximity sensor 30, the processor unit 23 and the light sources 26, 28. Alternatively these components can be integrated into an insert to be applied to a traditional support, in a similar manner to traditional inserts.

## Claims

1. A power point comprising:
- at least one proximity sensor (30),
- at least two light sources (26, 28),
- means (23) for processing the output signal from said proximity sensor (30) and for temporarily activating said light source (26, 28),
- an electrical insert located at said light source (26, 28) and operable directly by the user,
wherein at least one of said light sources (28) is for locating the power point and in that at least one of said light sources (26) is for identifying said insert operable by the user.

2. A power point as claimed in claim 1, **characterised by** comprising a support (4) applicable to a traditional flush-mounted box (2), a printed circuit card (10) applicable to said support (4) and carrying said light source (26, 28) applied thereto, a plate (12) for covering said card (10), and a cover (14) for fixing said plate (12) to said support (4).

3. A power point as claimed in claim 2, **characterised in that** said support (4) is provided with a perimetral flange, between which and said plate (12) there being interposed a seal gasket (20).

4. A power point as claimed in claim 3, **characterised in that** at least the flange of said support (4) is made of translucent material through which the light emitted by said light source (28) can be seen.

5. A power point as claimed in claim 2, **characterised in that** said support presents a depressed portion defining a space for housing the components mounted on said card (10).

6. A power point as claimed in claim 1, **characterised in that** said light source (26, 28) is mounted on said card (10).

7. A power point as claimed in claim 6, **characterised in that** said card comprises holes through which said light source (26, 28) is visible from the outside.

8. A power point as claimed in claim 1, **characterised by** comprising a power supply for each second light source (26) corresponding to an activated insert.

9. A power point as claimed in claim 1, **characterised by** comprising a timed power supply for each second light source (26) corresponding to a non-activated insert.

10. A power point as claimed in claim 1, **characterised by** comprising a timed power supply for each first light source (28).

11. A power point as claimed in claim 2, **characterised in that** said cover plate (12) is made of transparent material darkened to the extent of hiding the underlying card (10) from view but allowing said second light source (26) to be seen.

12. A power point as claimed in claim 2, **characterised in that** said cover plate (12) is made of opaque material and is perforated at said light source (26).

13. A power point as claimed in claim 1, **characterised in that** said proximity sensor is of capacitive type.

14. A power point as claimed in claim 1, **characterised in that** the processor unit (23) is programmed to perform different functions.

## Patentansprüche

1. Steckdose, umfassend:
- mindestens einen Näherungssensor (30),
- mindestens zwei Lichtquellen (26, 28),
- Mittel (23) zum Verarbeiten des Ausgangssignals vom Näherungssensor (30) und zum temporären Aktivieren der Lichtquelle (26, 28),
- einen elektrischen Einsatz, der sich an der Lichtquelle (26, 28) befindet und vom Benutzer direkt betätigt werden kann,
wobei mindestens eine der Lichtquellen (28) zum Lokalisieren der Steckdose ist, und wobei mindestens eine der Lichtquellen (26) zum Identifizieren des vom Benutzer betätigbaren Einsatzes ist.

2. Steckdose nach Anspruch 1, **dadurch gekennzeichnet, dass** sie einen Träger (4), der an einer herkömmlichen Unterputzdose (2) anbringbar ist, eine gedruckte Schaltkarte (10), die am Träger (4) anbringbar ist und die daran angebrachte Lichtquelle (26, 28) trägt, eine Platte (12) zum Abdecken der Karte (10) und eine Abdeckung (14) zum Befestigen der Platte (12) am Träger (4) umfasst.

3. Steckdose nach Anspruch 2, **dadurch gekennzeichnet, dass** der Träger (4) mit einem umfänglichen Flansch versehen ist, wobei zwischen diesem und der Platte (12) eine Dichtung (20) eingefügt ist.

4. Steckdose nach Anspruch 3, **dadurch gekennzeichnet, dass** wenigstens der Flansch des Trägers (4) aus durchscheinendem Material hergestellt ist, durch welches das von der Lichtquelle (28) ausgestrahlte Licht zu sehen ist.

5. Steckdose nach Anspruch 2, **dadurch gekennzeichnet, dass** der Träger einen vertieften Abschnitt aufweist, der einen Raum zum Unterbringen der auf der Karte (10) montierten Komponenten definiert.

6. Steckdose nach Anspruch 1, **dadurch gekennzeichnet, dass** die Lichtquelle (26, 28) auf der Karte (10) montiert ist.

7. Steckdose nach Anspruch 6, **dadurch gekennzeichnet, dass** die Karte Löcher umfasst, durch welche die Lichtquelle (26, 28) von außen sichtbar ist.

8. Steckdose nach Anspruch 1, **dadurch gekennzeichnet, dass** sie eine Leistungsversorgung für jede zweite Lichtquelle (26) umfasst, die einem aktivierten Einsatz entspricht.

9. Steckdose nach Anspruch 1, **dadurch gekennzeichnet, dass** sie eine zeitlich gesteuerte Leistungsversorgung für jede zweite Lichtquelle (26) umfasst, die einem nichtaktivierten Einsatz entspricht.

10. Steckdose nach Anspruch 1, **dadurch gekennzeichnet, dass** sie eine zeitlich gesteuerte Leistungsversorgung für jede erste Lichtquelle (28) umfasst.

11. Steckdose nach Anspruch 2, **dadurch gekennzeichnet, dass** die Abdeckplatte (12) aus durchsichtigem Material hergestellt ist, das soweit verdunkelt ist, dass die darunter liegende Karte (10) dem Blick verborgen ist, aber zulässt, dass die zweite Lichtquelle (26) zu sehen ist.

12. Steckdose nach Anspruch 2, **dadurch gekennzeichnet, dass** die Abdeckplatte (12) aus undurchsichtigem Material hergestellt und an der Lichtquelle (26) perforiert ist.

13. Steckdose nach Anspruch 1, **dadurch gekennzeichnet, dass** der Näherungssensor vom kapazitiven Typ ist.

14. Steckdose nach Anspruch 1, **dadurch gekennzeichnet, dass** die Prozessoreinheit (23) so programmiert ist, dass sie verschiedene Funktionen ausführt.

## Revendications

1. Point d'alimentation comprenant :
- au moins un capteur de proximité (30),
- au moins deux sources de lumière (26, 28),
- des moyens (23) pour traiter le signal de sortie provenant dudit capteur de proximité (30) et pour activer temporairement ladite source de lumière (26, 28),
- un élément inséré électrique situé au niveau de ladite source de lumière (26, 28) et pouvant être actionné directement par l'utilisateur,
dans lequel au moins une desdites sources de lumière (28) est destinée à localiser le point d'alimentation et dans lequel au moins une desdites sources de lumière (26) est destinée à identifier ledit élément inséré actionnable par l'utilisateur.

2. Point d'alimentation tel que revendiqué dans la revendication 1, **caractérisé en ce qu'**il comprend un support (4) applicable à un coffret encastré traditionnel (2), une carte de circuit imprimé (10) applicable sur ledit support (4) et portant ladite source de lumière (26, 28) qui y est appliquée, une plaque (12) pour recouvrir ladite carte (10), et un couvercle (14) pour fixer ladite plaque (12) audit support (4).

3. Point d'alimentation tel que revendiqué dans la revendication 2, **caractérisé en ce que** ledit support (4) est pourvu d'une bride périphérique, entre laquelle et ladite plaque (12) est interposé un joint d'étanchéité (20).

4. Point d'alimentation tel que revendiqué dans la revendication 3, **caractérisé en ce qu'**au moins la bride dudit support (4) est constituée d'un matériau translucide à travers lequel la lumière émise par ladite source de lumière (28) peut être vue.

5. Point d'alimentation tel que revendiqué dans la revendication 2, **caractérisé en ce que** ledit support présente une partie en creux définissant un espace pour loger les composants montés sur ladite carte (10).

6. Point d'alimentation tel que revendiqué dans la revendication 1, **caractérisé en ce que** ladite source de lumière (26, 28) est montée sur ladite carte (10).

7. Point d'alimentation tel que revendiqué dans la revendication 6, **caractérisé en ce que** ladite carte comprend des trous à travers lesquels ladite source de lumière (26, 28) est visible de l'extérieur.

8. Point d'alimentation tel que revendiqué dans la revendication 1, **caractérisé en ce qu'**il comprend une source d'alimentation pour chaque seconde source de lumière (26) correspondant à un élément inséré activé.

9. Point d'alimentation tel que revendiqué dans la revendication 1, **caractérisé en ce qu'**il comprend une alimentation électrique minutée pour chaque seconde source de lumière (26) correspondant à un élément inséré non activé.

10. Point d'alimentation tel que revendiqué dans la revendication 1, **caractérisé en ce qu'**il comprend une alimentation électrique minutée pour chaque première source de lumière (28).

11. Point d'alimentation tel que revendiqué dans la revendication 2, **caractérisé en ce que** ladite plaque de couvercle (12) est constituée d'un matériau transparent assombri au point de masquer de la vue la carte sous-jacente (10), mais tout en permettant à ladite seconde source de lumière (26) d'être vue.

12. Point d'alimentation tel que revendiqué dans la revendication 2, **caractérisé en ce que** ladite plaque de couvercle (12) est constituée d'un matériau opaque et est perforée au niveau de ladite source de lumière (26).

13. Point d'alimentation tel que revendiqué dans la revendication 1, **caractérisé en ce que** ledit capteur de proximité est de type capacitif.

14. Point d'alimentation tel que revendiqué dans la revendication 1, **caractérisé en ce que** l'unité de traitement (23) est programmée pour exécuter différentes fonctions.
